# EUROPEAN PATENT SPECIFICATION

(11) **EP 4 713 891 B1**
(45) Date of publication and mention of the grant of the patent: **24.06.2026**
(21) Application number: 25726702.1
(22) Date of filing: 19.05.2025
(51) Int. Cl.: G06V 10/82, G06F 21/31, G06V 10/98, G06V 20/52, G06V 40/16, G06V 40/40

(54) **LIGHTWEIGHT CONTINUOUS OR REPEATED AI-BASED PERSONHOOD IDENTITY VERIFICATION**
LEICHTGEWICHTIGE, KONTINUIERLICHE ODER ITERATIVE KI-BASIERTE IDENTITÄTSPRÜFUNG
VÉRIFICATION LÉGÈRE DE L'IDENTITÉ PERSONNELLE, CONTINUE OU RÉPÉTÉE, BASÉE SUR L'IA

(30) Priority: 24.05.2024 GB 202407439
(43) Date of publication of application: 25.03.2026
(73) Proprietor: Realeyes OÜ, 11615 Tallinn Harju (EE)
(72) Inventor: HAJIYEV, Elnar, 11615 Tallinn Harju (EE); JONES, Scott, 11615 Tallinn Harju (EE); ORTEGA GIL, Ana, 11615 Tallinn Harju (EE); ZABB, Laszlo, 11615 Tallinn Harju (EE)
(74) Representative: Mewburn Ellis LLP
(86) International application number: PCT/EP2025/063654
(87) International publication number: WO 2025/242588

(56) References cited:
- US-A1- 2018 068 173
- US-A1- 2023 177 508

## Description

### Field of the invention

The present invention relates to methods and systems for determining whether a user interacting with an electronic device is a real person and particularly, although not exclusively to the application of such methods and systems in a non-interruptive manner and/or in the context of a feedback collection process.

### Background

The third industrial revolution, or information age, facilitated the mass exchange of ideas and information between people across the world at an unprecedented scale. Now, as the fourth industrial revolution sees the realisation of evermore sophisticated artificial intelligence (Al) systems - e.g., generative Al systems - it is expected that the world will see the distribution of ideas and information that does not originate from a real human, but rather has been generated (whether wholly or in part) by an Al. The identification of whether information originates from a human source or an Al is therefore of critical importance as the development of Al progresses.

Alongside the development of Al, technological developments have improved user experience in a wide variety of contexts. An aspect of user experience (and, in particular, the user experience of their interactions with electronic devices) that has significantly improved as computing systems and user interfaces have developed is the seamlessness with which users are able to interact with their electronic devices. For example, as networking resources and utilisation have been expanded and improved, buffering of the content presented to a user via a display of an electronic device during said user's interaction with their electronic device has been reduced and even substantially eliminated so that content can be consumed conveniently and without interruptive delays. Seamless and convenient interactions with systems and devices such as this have become an expectation from users in the modern age.

US 2023/177508 A1 discloses a biometric authentication system for authenticating user(s) without requesting any personal information or device from the user(s). The system includes an onboarding module to enable the user(s) to register with the system. An input module receives the registration information from the user(s) and a machine learning module detects blur and bad image in the registration information. A verification module registers the user and creates a record by verifying the registration information with an issuing authority. A 3D liveliness detection module scans a face of the user, and creates a 3D face map of the user in real-time. An authentication module authenticates an identity of the user by searching for a matching record based on the face scan from pre-stored records and when a matching record is found. The user is authenticated without requesting any personal information and also 3D face map is deleted after authentication.

US 2018/068173 A1 discloses a technique for verifying identities of individuals via facial recognition and a graph database. Images of individuals to be identified can be can be captured with multiple mobile devices, such as by crowdsourcing, and transmitted to an identity verification server for identification. The identity verification server can maintain a graph database and locate a potential identity for an individual via facial recognition. Confirmation can be achieved by transmitting an image already in the database. A wide variety of validation techniques can be employed to filter out low quality data and improve the quality of matching. The identity verification server can manage profile information for the verified identity by creating and analyzing nodes and relationship records in the graph database. The identity verification server can update the graph database to track associations between verified identities.

### Summary of the Invention

Aspects of the invention are set out in the appended claims. In a general sense the present disclosure sets out methods and systems for determining whether or not a user interacting with an electronic device is a real person based on collected image data. The methods are carried out in a manner that does not interrupt the user's interaction with the electronic device. This may, for example, be achieved by using a relatively lightweight algorithm - e.g., a machine learning algorithm that has been appropriately trained to determine whether the user is a real person based on images collected during the user's natural interaction with the electronic device. These images may be referred to herein as ambient images, non-interruptive images, and/or "in the wild" images interchangeably.

By basing the determination of whether the user is a real person on images that were collected in a non-interruptive manner, the methods and systems described herein may achieve the benefit of identifying real human users (and e.g., distinguishing real human users from non-real users such as spoofing actors and/or Als) without interrupting the user's interaction with the electronic device. In other words, by implementing the methods and systems described herein, it may be possible to allow the user's seamless interaction with their electronic device to continue without interruption and still be able to determine whether said user is a real human.

In a first aspect, the present disclosure provides a computer-implemented method of determining whether a user providing feedback in a feedback collection process is a real person. The method comprises: collecting a facial image of the user while they interact with an electronic device to provide feedback without interrupting the user's interaction with the electronic device; and determining, using a personhood-recognition model whether the collected facial image depicts a real person. The personhood-recognition model is trained using a database of previously collected facial images to determine whether a given facial image depicts a real person.

Although exemplified above in the context of a user interacting with an electronic device as part of the user providing feedback in a feedback collection process, the methods described herein may be applied in any suitable context. For example, the method may be applied in any context where it may be beneficial for the administrator of the user's interaction to be able to verify that the user is a real person (e.g., in the context of a user interacting with an application - optionally deliverable via an API - where personhood is important). For example, the methods may be suitable for implementation in the context of a feedback collection process such as may be carried out for the purpose of market research. Alternatively, the methods described herein may be suitable for implementation in the context of mobile banking, secure account access (e.g., online accounts such as social media or email accounts, or device accounts), survey collection (e.g., for the purpose of market research), feedback/review collection (e.g., reviews of products and/or services), and/or any other context in which it is beneficial to ensure that the user is a real human. For example, the methods described herein may be applicable to combat online fraud, including fraud that is software/bot-driven and fraud that is human-driven (using software-based tools). In this way, it may be possible to both differentiate real-personhood from "bot-hood" and also to identify humans that are using increasingly more sophisticated tools to cloak their identities online. This may be particularly beneficial in any context where it is desirable to prevent the commission of fraud or the propagation of disinformation (e.g., marketplaces, comments sections, dating apps, or in the context of online child-protection).

In some examples, the method may be used as an alternative to, or in conjunction with, a standard verification method such as a known face recognition method, such as FacelD (RTM). For example, the methods described herein may be used as a lightweight verification that a user is a real person. When compared with known face recognition/verification methods, the methods described herein may beneficially not require the interruption of the user's interaction with the electronic device. Further, the methods described herein may beneficially consume fewer computing resources (and, for example, be implementable in less time) than known face recognition/verification methods. As such, the methods described herein may, in some examples, be implementable locally on the electronic device without the need to transmit personal data (e.g., facial images of the user) to a remote device or server.

The personhood-recognition model may be any suitably trained machine learning algorithm trained to determine whether a given image depicts the face of a real person. For example, the personhood-recognition model may be trained to distinguish between a facial image of a real person and one or more of: an image of an image of a person (e.g., an image of a previously collected photograph or video of a person) or an Al-generated representation of a person (e.g., a "deep fake" image or an Al generated avatar).

In some examples, the personhood-recognition model may be a neural network, for example a convolutional neural network, adapted with an appropriate arrangement of weights and nodes to discriminate between a facial image that depicts a real person and a facial image that does not. Any suitable number of weights and nodes may be used, and adapted to fit the constraints in which the method is implemented. For example, if the method is carried out by a processor of a user's mobile device (e.g., a mobile phone), a relatively more lightweight personhood-recognition model (in terms of consumed computing resources) may be more suitable than in an example where the method is carried out by a processor on a desktop computer.

The database of previously collected images may be accessible from a bespoke provider (e.g., via access to a remote server) and may comprise a store of curated facial images that facilitates the training of the personhood-recognition model to be able to discriminate whether the user is a real person based on non-interruptive/"in the wild" facial images.

In some embodiments, the method may further comprise: determining, using the personhood-recognition model, whether the collected facial image depicts a user that has previously participated in the feedback collection process or a unique user that has not previously participated in the feedback collection process.

Over time, the personhood-recognition model may effectively learn traits associated with specific users. For example, the personhood-recognition model may self-train to recognise one or more characteristics that are specific to a particular user and are indicative of whether or not the collected facial image depicts a real person. In this way, in response to a determination that the collected facial image depicts a user that has previously interacted with the electronic device (e.g., by participating in the feedback collection process), the personhood-recognition model may be configured to adapt its configuration/arrangement (e.g., by adapting one or more nodes, weights and/or processing flows) so as to specifically analyse the recognised characteristics that are specific to that particular user. This may, for example, provide a streamlined process flow for the personhood-recognition model, thereby improving the efficiency with which the methods described herein may be carried out.

In some examples, these recognised characteristics may be stored, for example as user metadata associated, with a user profile for a particular user.

Similarly, if it is determined that the user is a unique user that has not previously interacted with the electronic device (e.g., as part of a feedback collection process), the method may involve creating a new user profile with which characteristics specific to the unique user can be associated. As described above, these characteristics may be indicative of whether or not the collected facial image of the unique user depicts a real person.

The user profile(s) of any of the user(s) of the electronic device may be updated as the personhood-recognition model identifies/recognises the indicative characteristics and refines its configuration/arrangement (e.g., by updating one or more nodes, weights and/or processing flows of the personhood-recognition model).

In some embodiments, the method may further comprise: determining, using the personhood-recognition model, whether the collected facial image depicts a person in a predetermined demographic group.

Over time, the personhood-recognition model may effectively learn traits associated with specific demographic groups. For example, the personhood-recognition model may self-train to recognise one or more characteristics that are specific to a particular demographic group - e.g., particular demographic attributes indicative a collected facial image being one that depicts a real person. In this way, in response to a determination that the collected facial image depicts a user belonging to one or more from a set of predetermined demographic groups, the personhood-recognition model may be configured to adapt its configuration/arrangement (e.g., by adapting one or more nodes, weights and/or processing flows) so as to specifically analyse the recognised characteristics that are specific to that particular predetermined demographic group. This may for example, provide a streamlined process flow for the personhood-recognition model, thereby improving the efficiency with which the methods described herein may be carried out.

The collected facial image may depict a person that fits into a plurality of demographic groups. For example, the method may involve determining which of a variety of predetermined demographic groups, the person depicted in the collected facial image belongs to. This may involve determining an ethnic demographic group, a sex/gender-presentation demographic group, and/or an age-bracket demographic group that the person depicted in the collected facial image belongs to.

Each demographic group may be defined by a respective demographic attribute. For example, the demographic attribute defining each ethnic demographic group may be an ethnicity shared by each member of the demographic group. Similarly, the demographic attribute defining each sex/gender-presentation demographic group may be a sex and/or gender-presentation shared by each member of the demographic group. Similarly, the demographic attribute defining each age-bracket demographic group may be an age-range or age-bracket that each member of the demographic group falls within.

In some examples, the recognised demographic characteristics may be stored, for example, as demographic metadata, with a demographic profile for a particular predetermined demographic group.

The demographic profile(s) of any of the predetermined demographic groups may be updated as the personhood-recognition model identifies/recognises the indicative characteristics and refines its configuration/arrangement (e.g., by updating one or more nodes, weights and/or processing flows of the personhood-recognition model).

In some embodiments, the feedback collection process may involve the determination of an emotional response and/or behavioural response to consumed media content based on one or more collected facial images of a user consuming the media content.

As discussed herein, a feedback collection process may be one of a number of different contexts in which the methods and systems described herein may be implemented.

In general, in some examples, the methods and systems described herein may be implemented in contexts where the collected facial image is further used as part of the analysis in that context. For example, in cases where the context is a feedback collection process that involves the determination of an emotional response and/or behavioural response to consumed media content, the determination of the emotional response and/or behavioural response may be performed by analysing the same collected facial image(s) that are analysed to determine whether the user is a real person, in accordance with the methods described herein.

In this way, the computing resources required to implement the methods described herein may be reduced because bespoke images conforming to specific requirements may not be required. This differs from known face recognition/verification methods in which the user must adopt a specific position/orientation under specific conditions so that the recognition/verification can be carried out.

The personhood-recognition model includes a generative model. In other words, the personhood-recognition model, at least in part, includes a generated AI model. The step of determining, using the personhood-recognition model, whether the collected facial image depicts a real person comprises the interrogation of the generative model by an administrator of a personhood-verification system.

This involves: providing, by the generative model, a proposed determination to an administrator of a personhood-verification system, the proposed determination including one or more decision criteria. If the administrator does not approve the one or more decision criteria associated with a most recently provided proposed determination (e.g., because the administrator wants the generative model to take additional and/or alternative factors into account when making the determination), the method may further comprise: in response to one or more inputs from the administrator to the generative model, updating the one or more decision criteria, and updating the proposed determination in accordance with the updated one or more decision criteria; and providing, by the generative model, the updated proposed determination to the administrator, the updated proposed determination including the updated one or more decision criteria. Additionally or alternatively, if the administrator approves the one or more decision criteria associated with the most recently provided proposed determination, the method may further comprise: selecting the most recently provided proposed determination as the determination of whether the collected facial image depicts a real person.

In other words, the determining of whether the collected facial image depicts a real person may involve an iterative interrogation, by an administrator of the personhood-verification system, of the generative model of the personhood-recognition model to ensure that the determination of whether a collected facial image depicts a real person is in accordance with a set of one or more decision criteria approved by the administrator.

The one or more inputs provided to the generative model by the administrator may, for example, include specific instructions to include one or more specified decision criteria in the decision-making process. Additionally or alternatively, the one or more inputs provided to the generative model by the administrator may, for example, include one or more indications of a type of decision criteria that may be suitable. In such cases, the generative model may be trained/configured to identify and/or select one or more appropriate decision criteria that satisfy the provided one or more indications.

In some embodiments, the method may further comprise: collecting further data associated with the user while they interact with the electronic device to provide feedback without interrupting the user's interaction with the electronic device. In some examples, the further data may not be a facial image of the user. In some examples, the further data may be used by the personhood-recognition model in the determining of whether the collected facial image depicts a real person.

In other words, the methods described herein may involve multi-modal data collection. In this way, collected data having different modalities may be used to determine whether or not the collected facial image depicts a real person. Data having a non-image modality may be suitable for corroborating, or supporting the determination of whether the collected facial image depicts a real person. For example, data having a non-image modality may provide further information so that the determination made by the personhood-recognition model is more reliable.

In some examples, the personhood-recognition model may be further trained using data in non-image modalities to improve the performance of the personhood-recognition model.

In some embodiments, the further data may be one or more of: audio data of the user while they interact with the electronic device, motion data indicative of movement of the electronic device, user metadata associated with a user profile of the user, and/or device metadata associated with a device profile of the electronic device.

For example, audio data may be include recordings of the voice of the user, breathing sounds of the user, and/or other sounds made in the environment of the user during their interaction with the electronic device. The audio data may be collected via a microphone of the electronic device, or by any other suitable audio-capturing device.

In some examples, the motion data may be include gyroscopic or inertial motion measurements that capture motion of the electronic device during the user's interaction with the electronic device. The motion data may be collected via an inertial measurement unit (IMU), gyroscope, or by any other suitable motion-capturing device.

The user metadata may include a user profile and/or demographic profile such as those described above.

The device metadata may refer to the contents of a device profile that, for example, is indicative of operational parameters of the electronic device (e.g., a resolution of the camera or image-capturing device used to collect the facial image, a sound quality capturable by the microphone or audio-capturing device used to collect audio data, and/or an accuracy or reliability of any of the data capturing devices used to collect data for use by the personhood-recognition model in the determination of whether or not the collected facial image depicts a real person).

In some examples, the further data may include image metadata. The image metadata may include, for example, a watermark or other identifier that is useable to verify the authenticity of the source of an image. In this way, it may be possible to determine whether an image that is collected is an image from a trusted source or whether it has been injected through an attack (e.g., a cyber-attack).

In some embodiments, the method may further comprise: determining a confidence score indicative of a confidence level associated with the determination of whether the collected facial image depicts a real person; and if the confidence score is below a predetermined confidence threshold: (a) discarding the collected facial image, (b) collecting a new facial image of the user while they interact with the electronic device to provide feedback without interrupting the user's interaction with the electronic device, and (c) determining, using the personhood-recognition model, whether the new collected facial image depicts a real person.

The confidence score may be indicative of a reliability of the personhood-recognition model's determination of whether or not the collected facial image depicts a real person.

In some examples, the predetermined confidence threshold may be set by a user of the methods described herein. For example, a provider of the feedback collection process, or a provider of an application programming interface (API), or other interaction may set the predetermined confidence threshold.

Further, in some examples, the predetermined confidence threshold may be adjustable based on the context. For example, in some contexts (e.g., mobile banking), owing to a high level of desired data security, the predetermined confidence threshold may be set at a high level (e.g., 95% or more, 97% or more, 99% or more, 99.5% or more, or 99.9% or more) that is higher than in a context requiring a relatively lower of data security (e.g., a feedback collection process). Additionally or alternatively, the predetermined confidence threshold may be adjustable based on a user history associated with a user depicted in the collected facial image(s). For example, the confidence threshold associated with a user that has a consistent history of passing personhood-verifications tests such as those described herein may be lower than a corresponding confidence threshold associated with a user that has a history of failing personhood-verification tests such as those described herein.

In some examples, on a first iteration of the methods described herein, the predetermined confidence threshold may be set at a high level (e.g., 95% or more, 97% or more, 99% or more, 99.5% or more, or 99.9% or more) to ensure that the user at the beginning of the interaction with their electronic device; and, subsequently, the predetermined confidence threshold may be reduced (e.g., to a threshold of 65% or more, 70% or more, 75% or more, 80% or more, or 85% or more) to a lower threshold indicative of the fact that a lower degree of confidence is needed for the provider to be satisfied that a user that has been previously identified as being a real person is still a real person than to be satisfied that a new user that has not been previously considered according to the methods described herein is a real person.

In some embodiments, the method may further comprise: (d) determining a new confidence score indicative of a confidence level associated with the determination of whether the new collected facial image depicts a real person; and if the new confidence score is below the predetermined confidence threshold, iteratively repeating operations (a) to (d) until a determined corresponding new confidence score is not below the predetermined confidence threshold.

In this way, the methods described herein can be carried out iteratively until a determination of whether or not the user is a real person is made with a high enough confidence level that the provider of the feedback collection process, API, or other interaction is satisfied that the determination is accurate.

In some embodiments, the method may further comprise: for each iteration of operations (a) to (d), increasing a complexity of the personhood-recognition model to improve the confidence score associated with each determination of whether each new collected facial image depicts a real person.

In some embodiments, increasing the complexity of the personhood recognition model may include one or more of: increasing computing resources available for use by the personhood-recognition model for determining whether a new collected facial image depicts a real person; increasing a number of collected facial images used by the personhood-recognition model for determining whether a new collected facial image depicts a real person; and/or increasing a number of modalities of input data used by the personhood-recognition model for determining whether a new collected facial image depicts a real person.

In some examples, if the confidence score for a given iteration of the operations is below the predetermined confidence threshold, the next iteration of the operations may be carried out with a higher degree of complexity to increase the confidence score of that next iteration.

For example, the determination for the next iteration may be made, using the personhood-recognition model, based on a plurality of collected facial images (i.e., a higher number of collected facial images than used in the previous iteration of the operations) to improve the reliability, and therefore confidence level, associated with the determination of whether or not the user depicted in the plurality of collected facial images is a real person.

Additionally or alternatively, in some examples, the determination for the next iteration may be made, using the personhood-recognition model, based on collected data having a larger number of modalities than the previous iteration. For example, the determination of the next iteration of operations may be based on collected audio data, motion data, user metadata and/or device metadata. These further modalities may support and/or corroborate the determination of whether or not the user depicted in the collected facial image is a real person to thereby increase the confidence score/level associated with the determination.

In some examples, increasing the complexity of the personhood-recognition model may involve increasing the computing resources available for use by the personhood-recognition model to improve the performance of the personhood-recognition model. In some examples, this may involve transmitting the collected facial image (and any other input data) from the electronic device to a remote device or server that has more computing resources available than the electronic device, and carrying out the determination of whether or not the user is a real person using a copy of the personhood-recognition model that is available for execution on that remote device or server.

In some embodiments, the method may further comprise: after determining a predetermined number of confidence scores, each being indicative of a respective confidence level associated with a determination of whether a corresponding collected facial image depicts a real person, if the most recently determined new confidence score is below the predetermined confidence threshold: interrupting the user's interaction with the electronic device; prompting the user to position themselves in a predetermined orientation relative to a camera; collecting, by the camera, an additional facial image of the user while their interaction with the electronic device is interrupted; and determining, using the personhood-recognition model, whether the additional collected facial image depicts a real person. In some examples, the predetermined orientation may be chosen such that an additional confidence score associated with the determination of whether the additional collected facial image depicts a real person is not below the predetermined confidence threshold.

For example, the user's interaction may be interrupted after the first (or each) time the confidence level is below the predetermined confidence threshold. Additionally or alternatively, the user's interaction may be interrupted after a predetermined number of iterative repetitions of operations (a) to (d).

After a certain number of determinations that do not satisfy the predetermined confidence threshold (i.e., a predetermined number of "failed" determinations), it may be necessary to eventually interrupt the user's interaction with the electronic device so that the provider of the feedback collection process, API or other interaction is satisfied that the user is a real person. In effect, this prevents a malicious actor (e.g., a spoofing agent or malicious AI) from exploiting a continued failure to satisfy the predetermined confidence threshold to obtain illicit access to an interaction with the electronic device.

By ensuring that the user is oriented (relative to the camera, or another suitable image-capturing device) in a way that ensures that the eventually determined confidence score satisfies the predetermined confidence threshold, it can be ensured that the provider of the feedback collection process, API, or other interaction is satisfied that the determination of whether or not the user depicted in the collected facial image depicts a real person has been made with a sufficient level of confidence/reliability.

In some embodiments, the method may further comprise: determining the additional confidence score; and, if the additional confidence score is below the predetermined confidence threshold, terminating the feedback collection process and/or discarding the feedback received from the user during the feedback collection process.

As an end result, if even an iteration of the operations that has been interrupted so as to maximise the corresponding confidence score and level does not satisfy the predetermined confidence threshold, the provider of the feedback collection process, API, or other interaction may choose to discard data collected from that user so that they can be confident that the data they collect comes from a real person.

In some embodiments, the method may further comprise: before the determining of whether the or each collected facial image depicts a real person, determining a respective quality score indicative of the quality of the corresponding collected facial image; and, if the determined quality score is below a predetermined quality threshold: (i) discarding the corresponding collected facial image, and (ii) collecting a further facial image of the user while they interact with the electronic device without interrupting the user's interaction with the electronic device.

In some instances, the collected facial image may not be suitable for determining whether or not the user depicted in the collected facial image is a real person because the quality of the collected facial image is insufficient. For example, the collected facial image may be too blurry, too dark, too bright, over- or under-saturated, or otherwise unsuitable for determining whether or not the user depicted in the collected facial image is a real person.

In such instances, it may be beneficial to discard the collected facial image and collect a further facial image that does satisfy the predetermined quality threshold so that the determination of whether or not the user depicted in the further collected facial image can be made more accurately.

In some embodiments, the method may further comprise: (iii) determining a further quality score indicative of a quality of the corresponding further collected facial image; and, if the determined further quality score is below the predetermined quality threshold, iteratively repeating operations (i) to (iii) until a determined corresponding further quality score is not below the predetermined quality threshold.

In this way, the methods described herein can be carried out iteratively until a facial image can be collected that is suitable for a sufficiently accurate determination of whether or not the user depicted in a corresponding collected facial image is a real person.

In some embodiments, the method may further comprise: after determining a predetermined number of quality scores, each being indicative of a respective quality of a corresponding collected facial image, if the most recently determined further quality score is below the predetermined quality threshold: interrupting the user's interaction with the electronic device; prompting the user to adjust one or more imaging conditions associated with the collection of facial images of the user to a predetermined condition; and collecting an other facial image of the user while their interaction with the electronic device is interrupted. In some examples, the predetermined condition may be chosen such that an other quality score associated with the other collected facial image is not below the predetermined quality threshold.

For example, the user's interaction may be interrupted after the first (or each) time the quality score is below the predetermined quality threshold. Additionally or alternatively, the user's interaction may be interrupted after a predetermined number of iterative repetitions of operations (i) to (iii).

After collecting a certain number of facial images that do not satisfy the predetermined quality threshold (i.e., a predetermined number of "failed" collections), it may be necessary to eventually interrupt the user's interaction with the electronic device so that the a facial image can be collected that is of sufficient quality to be able to make an accurate determination of whether or not the user depicted in said collected facial image is a real person.. In effect, this prevents a malicious actor (e.g., a spoofing agent or malicious AI) from exploiting a continued failure to collect a facial image having sufficient quality to be able to determine whether or not said actor is a real person.

By ensuring that the imaging conditions satisfy a predetermined condition that will ensure the other collected facial image satisfies the predetermined quality threshold, it can be ensured that the determination of whether or not the user depicted in the other collected facial image is a real person can be performed accurately.

In some embodiments, prompting the user to adjust the one or more imaging conditions may include prompting the user to adjust one or more of: a lighting level of an environment in which facial images of the user are being collected; a distance between the user and a camera used to collect the facial images of the user; and/or a background behind the user when the facial images of the user are being collected.

Additionally or alternatively, in some examples, adjusting the one or more imaging conditions may be carried out with reference to known operating parameters of the camera used to collect the facial image(s). For example, this may involve analysing the device metadata to determine how to adjust the one or more imaging conditions. This may be beneficial because, different cameras may have different preferred imaging conditions dependent on their operational parameters (e.g., as encoded in the device metadata). For example, for some imaging devices (cameras), it may be possible to manipulate a colour spectrum of the collected facial image using software-based approaches to highlight and identify a collected facial image without needing the one or more imaging conditions to be manually adjusted by the user. In other words, the methods described herein may involve both software-based analytical approaches and manual adjustments of the one or more imaging conditions to improve the quality score of a collected facial image.

In other words, the predetermined condition may be a lighting level, distance, or background parameters that ensures that the brightness, contrast, saturation, and/or other property of the other collected facial image satisfies the predetermined quality threshold.

In some embodiments, the method may further comprise: determining the other quality score; and, if the other quality score is below the predetermined quality threshold, terminating the feedback collection process and/or discarding the feedback received from the user during the feedback collection process.

As an end result, if even an iteration of the operations that has been interrupted so as to maximise the corresponding quality score and level does not satisfy the predetermined quality threshold, the provider of the feedback collection process, API, or other interaction may choose to discard data collected from that user so that they can be confident that the data they collect is of sufficient quality to be able to determine whether or not the user depicted in the corresponding collected facial image(s) is a real person.

In some embodiments, the method may further comprise: repeating any of the methods described herein continuously or at regular intervals to monitor the user interacting with the electronic device; determining whether the user has changed to a new user between a first iteration of the method and at least one of the later repetitions; and, in response to a determination that the user has changed to a new user, registering the feedback provided by the new user as part of a new feedback collection process, or terminating the feedback collection process, or discarding feedback collected from the new user.

In some embodiments, the database of previously collected facial images may comprise a plurality of facial images imaged from a plurality of different imaging angles, depicting a plurality of different people having a plurality of different demographic attributes, and/or imaged in a plurality of different imaging conditions.

In some embodiments, the database of previously collected facial images may comprise a plurality of images collected from users interacting with a respective electronic device. In some examples, one or more of the collected facial images may have been collected without interrupting the corresponding user's interaction with their respective electronic device.

In some embodiments, the method may further comprise: storing the or each collected facial image in the database of previously collected facial images. In some examples, the or each stored facial image may be useable to retrain and/or test the personhood-recognition model.

In some embodiments, the user interacting with the electronic device may be interacting with an application programming interface, API, installed on the electronic device.

In some embodiments, if it is determined that the collected facial image does not depict a real person, the method may further comprise: interrupting the user's interaction with the API; challenging the user with a challenge-response test adapted to tell computers and humans apart; and, if the user fails the challenge-response test, terminating the API, or, if the user passes the challenge-response test, permitting the user to resume their interaction with the API.

In this way, a challenge-response test (e.g., a CAPTCHA) may be used as a backstop to prevent a non-human user from accesses the API, feedback collection process, or other user-electronic device interaction.

In another aspect, the present disclosure provides a computer comprising a memory and a processor configured to carry out any of the methods described herein.

In another aspect, the present disclosure provides a computer-readable medium comprising logic that, when executed by a processor, causes the processor to carry out the methods described herein.

In the described embodiments of the invention, the system may be implemented as any form of a computing and/or electronic device. Such a device may comprise one or more processors which may be microprocessors, controllers, or any other suitable type of processors for processing computer executable instructions to control the operation of the device in order to gather and record routing information. In some examples, for example where a system on a chip architecture is used, the processors may include one or more fixed function blocks which implement a part of the method in hardware (rather that software or firmware). Platform software comprising an operating system, or any other suitable platform software may be provided at the computing-based device to enable application software to be executed on the device.

Moreover, the acts described herein may be embodied using computer-executable instructions that can be implemented by one or more processors and/or stored on a computer-readable medium or media. The computer-executable instructions can include routines, sub-routines; programs; threads of execution, and/or the like. Still further, results of acts of the methods can be stored in a computer-readable medium, displayed on a display device, and/or the like.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media. Computer-readable storage media may include volatile or non-volatile, removable or non-removable media implemented in any method or technology for storage of information such as computer readable instructions, data structures, program modules or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer.

Although illustrated as a local device, it will be appreciated that the computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part of or all the software to run the program. Alternatively, the local computer may download pieces of the software as needed or execute some software instruction at a local terminal and some at a remote computer (or computer network). Those skilled in the art will also realise that by utilising conventional techniques known to those skilled in the art that all, or a portion of the software instructions may be carried out by a dedicated circuit, such as a DSP, programmable logic array, or the like.

The invention includes the combination of the aspects and preferred features described except where such a combination is clearly impermissible or expressly avoided.

The order of the operations of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples.

It will be understood that the benefits and advantages described above may relate to one embodiment or may relate to several embodiments. The embodiments are not limited to those that solve any or all the stated problems or those that have any or all the stated benefits and advantages. Variants should be considered to be included into the scope of the invention.

### Summary of the Figures

Embodiments and experiments illustrating the principles of the invention will now be discussed with reference to the accompanying figures, in which:
FIG. 1 depicts a system involving a user interacting with one or more electronic devices.
FIG. 2 illustrates various data capturing devices that may be used to collect data from the user while they interact with an electronic device.
FIG. 3 shows a system for carrying out the methods described herein.
FIG. 4 shows a method of determining whether a user interacting with an electronic device is a real person.
FIG. 5 shows another method of determining whether a user interacting with an electronic device is a real person.
FIG. 6A shows a first part of another method of determining whether a user interacting with an electronic device is a real person.
FIG. 6B shows a second part of another method of determining whether a user interacting with an electronic device is a real person.
FIG. 7A shows a first part of another method of determining whether a user interacting with an electronic device is a real person.
FIG. 7B shows a second part of another method of determining whether a user interacting with an electronic device is a real person.
FIG. 8 shows another method of determining whether a user interacting with an electronic device is a real person.
FIG. 9 shows another method of determining whether a user interacting with an electronic device is a real person.
FIG. 10 is a schematic of a computing system/apparatus suitable for carrying out the methods described herein.

### Detailed Description of the invention

Aspects and embodiments of the present invention will now be discussed with reference to the accompanying figures. Further aspects and embodiments will be apparent to those skilled in the art.

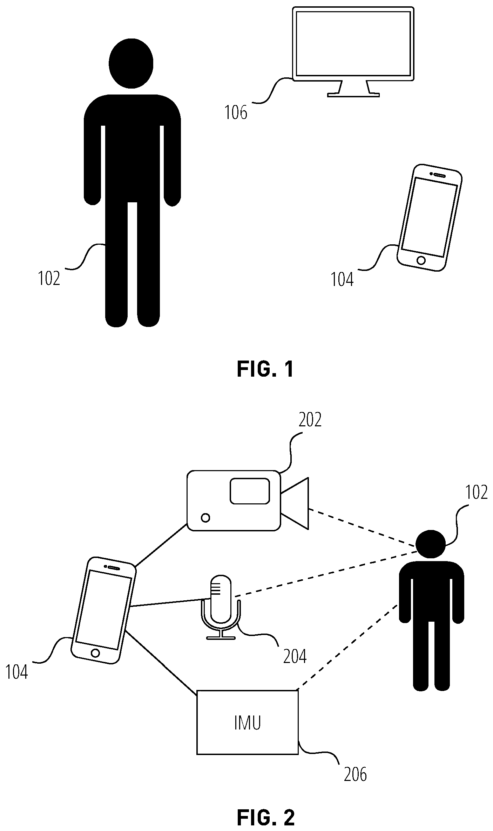

FIG. 1 depicts a system involving a user 102 interacting with one or more electronic devices 104, 106. For example, the one or more electronic devices 104, 106 may include a mobile device 104 and/or a computer 106. The user 102 may be interacting with one or more electronic device 104, 106 as part of a feedback collection process - for example through an API installed on the mobile device 104.

FIG. 2 illustrates various data capturing devices 202, 204, 206 that may be used to collect data from the user 102 while they interact with an electronic device such as the mobile device 104. The mobile device 104 may include a camera 202 or other suitable image-capturing device for collecting one or more facial images of the user 102, a microphone 204 or other suitable audio-capturing device for collecting audio data from user 102 and their environment, and an inertial measurement unit 206 (IMU) or gyroscope or other motion-capturing device for collecting motion data indicative of a movement of the mobile device 104. The data collected by the various data capturing devices 202, 204, 206 may be used in the methods described herein to determine whether or not the user 102 is a real person.

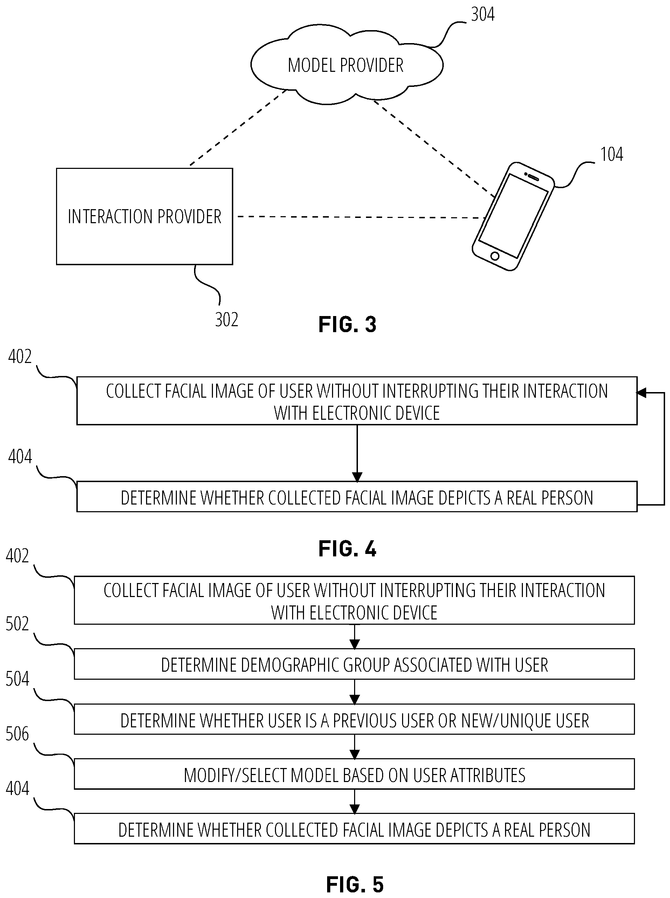

FIG. 3 shows a system for carrying out the methods described herein. The system includes an electronic device (such as the mobile device 104) for the user 102 to interact with. The electronic device is communicatively connected to an interaction provider 302 that provides the necessary software, hardware, protocols, and/or API for the interaction process (e.g., a feedback collection process) between the user 102 and the electronic device. The interaction provider 302 may be a device or a server that may be remote from the electronic device 104. The electronic device 104 and the interaction provider 302 are communicatively connected to a model provider 304 that is configured to train and provide the personhood-recognition model for use in the methods described herein. The model provider 304 may be a device or a server that may be remote from one or both of the electronic device 104 and the interaction provider 302.

The model provider 304 may be configured to store a database of previously collected facial images and use that database to train the personhood-recognition model. In some examples of the methods described herein, each facial image collected as part of the methods described herein may be stored in the database of previously collected facial images.

The methods described herein may be implemented on any one or more of: the electronic device 104, the interaction provider 302, and/or the model provider 304, whether on a single device/server or distributed amongst any combination of the electronic device 104, the interaction provider 302, and/or the model provider 304.

FIG. 4 shows a method of determining whether a user 102 interacting with an electronic device 104, 106 is a real person.

The method comprises, in an operation 402, collecting a facial image of a user 102 without interrupting their interaction with the electronic device 104, 106. The facial image may be, for example, collected by a camera 202 of the electronic device 104, 106.

The method further comprises, in an operation 404, determining - using a personhood-recognition model trained and provided by the model provider 304 - whether or not the collected facial image depicts a real person.

The method further involves repeating operations 402 and 404, either at regular or semi-regular intervals or continuously to monitor the user's interaction with the electronic device 104, 106 so as to determine whether or not the user is a real person and/or changes throughout the interaction with the electronic device 104, 106.

FIG. 5 shows another method of determining whether a user 102 interacting with an electronic device 104, 106 is a real person.

The method comprises, in an operation 402, collecting a facial image of a user 102 without interrupting their interaction with the electronic device 104, 106. The facial image may be, for example, collected by a camera 202 of the electronic device 104, 106.

The method further comprises, in an operation 502, determining a demographic group associated with the user 102. In other words, the method comprises determining which demographic group the user 102 belongs to.

The method further comprises, in an operation 504, determining whether the collected facial image depicts a user that has previously interacted with the electronic device 104, 106 (or another electronic device that is communicatively connected to the interaction provider 302 and/or the model provider 304), or whether said collected facial image depicts a new/unique user that has not previously interacted with the electronic device 104, 106 (or another electronic device that is communicatively connected to the interaction provider 302 and/or the model provider 304).

The determinations made in operations 502 and 504 may be carried out by implementing an appropriately developed image recognition algorithm that may or may not be part of the personhood-recognition model.

The method further comprises, in an operation 506, modifying and/or selecting one or more parameters of the personhood-recognition model based on the outcome of the determinations in operations 504 and 506.

For example, the demographic group to which the user 102 belongs may have a demographic profile associated with it that stores one or more preferred operating parameters for the personhood-recognition model when the personhood-recognition model is used to determine whether or not a collected facial image depicting a person from that demographic group depicts a real person. Similarly, the user 102 may have a user profile associated with them that stores one or more preferred operating parameters for the personhood-recognition model when the personhood-recognition model is used to determine whether or not a collected facial image depicting that particular user depicts a real person. In some examples, as the methods described herein are implemented over time, the user profiles and/or the demographic profiles used to modify the personhood-recognition model may be updated and refined as the personhood-recognition model is implemented.

Modifying and/or selecting one or more parameters of the personhood-recognition model may involve adjusting one or more of the weights, nodes, or processing flows of the personhood-recognition model in accordance with the demographic profile and/or user profile associated with the determined demographic group (from operation 502) and the identified user 102 (from operation 504).

Once the personhood-recognition model has been adapted to be optimised to the particular user 102 depicted in the collected facial image, the method further comprises, in an operation 404, determining - using a personhood-recognition model trained and provided by the model provider 304 - whether or not the collected facial image depicts a real person.

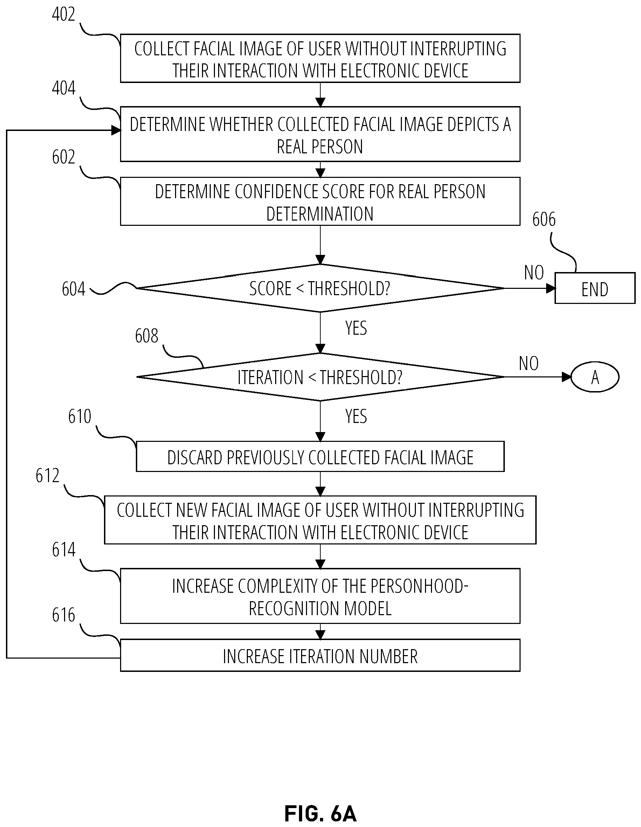

FIG. 6A shows a first part of another method of determining whether a user 102 interacting with an electronic device 104, 106 is a real person.

The method comprises, in an operation 402, collecting a facial image of a user 102 without interrupting their interaction with the electronic device 104, 106. The facial image may be, for example, collected by a camera 202 of the electronic device 104, 106.

The method further comprises, in an operation 404, determining - using a personhood-recognition model trained and provided by the model provider 304 - whether or not the collected facial image depicts a real person.

The method further comprises, in an operation 602, determining a confidence score indicative of a confidence level associated with the determination of whether the collected facial image depicts a real person. The confidence score may be indicative of a reliability of the personhood-recognition model's determination of whether or not the collected facial image depicts a real person.

The method further comprises, in an operation 604, determining whether the determined confidence score is below a predetermined confidence threshold. The predetermined confidence threshold may be set by any of the user 102, the interaction provider 302, and/or the model provider 304, and may be adjustable by any one or more of those parties, as appropriate for the context.

If the determined confidence score is not below the predetermined confidence threshold, the method ends at operation 606.

If, on the other hand, the determined confidence score is below the predetermined confidence threshold, the method proceeds to operation 608. In operation 608, the method comprises, determining whether an iteration number of the method exceeds an iterative repetition threshold. In other words, in a first instance of the method, the iteration number is initialised at '1'. The iteration number is indicative of how many times a confidence score has been determined for a respective determination of whether or not a corresponding collected facial image depicts a real person. In some examples, there may be a maximum number of acceptable iterative repetitions of the method.

If the iteration number is less than the iterative repetition threshold, the method proceeds to operation 610. In operation 610, the method comprises, discarding the collected facial image.

The method further comprises, in an operation 612, collecting a new facial image of the user 102 without interrupting their interaction with the electronic device 104, 106. The new facial image may be, for example, collected by the camera 202 of the electronic device 104, 106.

The method further comprises, in an operation 614, increasing a complexity of the personhood-recognition model. Increasing the complexity of the personhood recognition model may include one or more of: increasing computing resources available for use by the personhood-recognition model for determining whether a new collected facial image depicts a real person; increasing a number of collected facial images used by the personhood-recognition model for determining whether a new collected facial image depicts a real person; and/or increasing a number of modalities of input data used by the personhood-recognition model for determining whether a new collected facial image depicts a real person.

The method further comprises, in an operation 616, increasing the iteration number by 1 - to thereby indicate that the number of confidence scores determined has increased. Following the increase in the iteration number, the method returns to operation 404 to determine, using the personhood-recognition model, whether or not the new collected facial image depicts a real person.

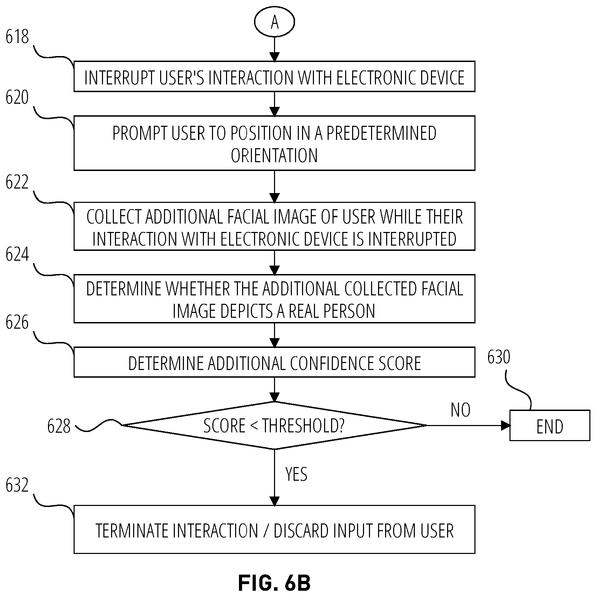

If, however, after a number of iterations of operations 404 to 616, the iteration number is not less than the iterative repetition threshold, the method proceeds to operation 618, as shown in FIG. 6B.

FIG. 6B shows a second part of another method of determining whether a user 102 interacting with an electronic device 104, 106 is a real person.

The method comprises, in an operation 618, interrupting the user's interaction with the electronic device 104, 106.

The method further comprises, in an operation 620, prompting the user to position themselves in a predetermined orientation. The predetermined orientation is selected such that a determination of whether or not the user 102 depicted in a facial image (that is collected when the user 102 is in the predetermined orientation) is a real person satisfies the predetermined confidence threshold.

The method further comprises, in an operation 622, collecting an additional facial image of the user 102 while their interaction with the electronic device 104, 106 is interrupted and they are in the predetermined orientation. The additional facial image may be, for example, collected by the camera 202 of the electronic device 104, 106.

The method further comprises, in an operation 624, determining, using the personhood-recognition model, whether or not the additional collected facial image depicts a real person.

The method further comprises, in an operation 626, determining an additional confidence score indicative of a confidence level associated with the determination of whether the additional collected facial image depicts a real person. The additional confidence score may be indicative of a reliability of the personhood-recognition model's determination of whether or not the additional collected facial image depicts a real person.

The method further comprises, in an operation 628, determining whether the determined additional confidence score is below the predetermined confidence threshold. The predetermined confidence threshold may be set by any of the user 102, the interaction provider 302, and/or the model provider 304, and may be adjustable by any one or more of those parties, as appropriate for the context.

If the determined additional confidence score is not below the predetermined confidence threshold, the method ends at operation 630.

If, on the other hand, the determined additional confidence score is below the predetermined confidence threshold, the method further comprises - in an operation 632 - terminating the user's interaction with the electronic device 104, 106 and/or discarding input received from the user 102 as part of their interaction with the electronic device 104, 106.

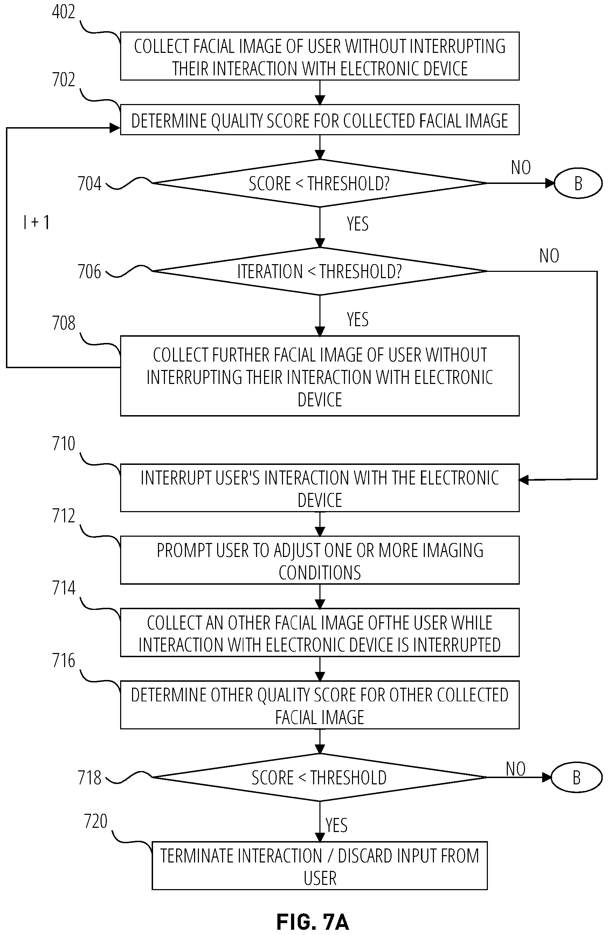

FIG. 7A shows a first part of another method of determining whether a user 102 interacting with an electronic device 104, 106 is a real person.

The method comprises, in an operation 402, collecting a facial image of a user 102 without interrupting their interaction with the electronic device 104, 106. The facial image may be, for example, collected by a camera 202 of the electronic device 104, 106.

The method further comprises, in an operation 702, determining a quality score indicative of the quality of the collected facial image. The quality score may be indicative of a brightness, saturation, and/or blurriness of the collected facial image.

The method further comprises, in an operation 704, determining whether the determined quality score is below a predetermined quality threshold. The predetermined quality threshold may be set by any of the user 102, the interaction provider 302, and/or the model provider 304, and may be adjustable by any one or more of those parties, as appropriate for the context.

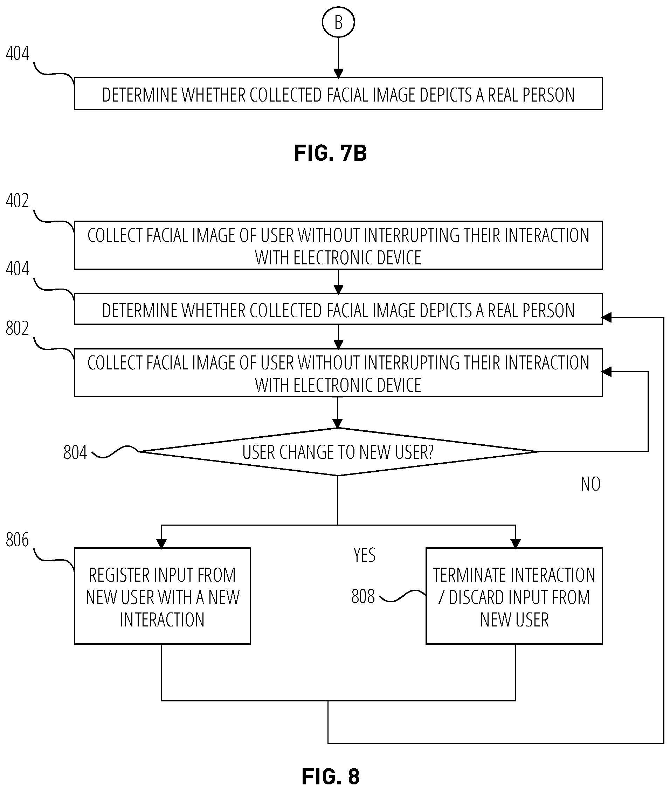

If the determined quality score is not below the predetermined quality threshold, the method proceeds to FIG. 7B, at which the method comprises - in an operation 404 - determining, using a personhood-recognition model trained and provided by the model provider 304, whether or not the collected facial image depicts a real person.

If, on the other hand, the determined quality score is below the predetermined quality threshold, the method proceeds to operation 706. In operation 706, the method comprises, determining whether an iteration number of the method exceeds an iterative repetition threshold. In other words, in a first instance of the method, the iteration number is initialised at '1'. The iteration number is indicative of how many times a quality score has been determined for a respective determination of whether or not a corresponding collected facial image depicts a real person. In some examples, there may be a maximum number of acceptable iterative repetitions of the method.

If the iteration number is less than the iterative repetition threshold, the method proceeds to operation 708. In operation 708, the method comprises, discarding the collected facial image and collecting a further facial image of the user 102 without interrupting their interaction with the electronic device 104, 106.

The method then increases the iteration number by 1 and returns to operation 702 to determine a further quality score indicative of a quality of the further collected facial image.

If, on the other hand, after a number of iterations of operations 702 to 706, the iteration number is not less than the iterative repetition threshold, the method proceeds to operation 710, in which the method comprises interrupting the user's interaction with the electronic device 104, 106.

The method further comprises, in an operation 712, prompting the user to adjust one or more imaging conditions in which facial images are collected. Prompting the user 102 to adjust the one or more imaging conditions may include prompting the user 102 to adjust one or more of: a lighting level of an environment in which facial images of the user 102 are being collected; a distance between the user 102 and a camera 202 used to collect the facial images of the user 102; and/or a background behind the user 102 when the facial images of the user 102 are being collected. The imaging conditions may be adjusted to a predetermined condition. By ensuring that the imaging conditions satisfy a predetermined condition that will ensure the other collected facial image satisfies the predetermined quality threshold, it can be ensured that the determination of whether or not the user depicted in the other collected facial image is a real person can be performed accurately.

The method further comprises, in an operation 714, collecting an other facial image of the user 102 while their interaction with the electronic device 104, 106 is interrupted and they are being imaged in the predetermined condition. The other facial image may be, for example, collected by the camera 202 of the electronic device 104, 106.

The method further comprises, in an operation 716, determining an other quality score indicative of the quality of the other collected facial image. The other quality score may be indicative of a brightness, saturation, and/or blurriness of the collected facial image.

The method further comprises, in an operation 718, determining whether the determined other quality score is below the predetermined quality threshold. The predetermined quality threshold may be set by any of the user 102, the interaction provider 302, and/or the model provider 304, and may be adjustable by any one or more of those parties, as appropriate for the context.

If the determined other quality score is not below the predetermined quality threshold, the method proceeds to FIG. 7B, at which the method comprises - in an operation 404 - determining, using a personhood-recognition model trained and provided by the model provider 304, whether or not the other collected facial image depicts a real person.

If, on the other hand, the determined other quality score is below the predetermined quality threshold, the method proceeds to operation 720, in which the method further comprises terminating the user's interaction with the electronic device 104, 106 and/or discarding input received from the user 102 as part of their interaction with the electronic device 104, 106.

FIG. 7B shows a second part of another method of determining whether a user interacting with an electronic device is a real person. As described above in relation to FIG. 7A, the method comprises, in an operation 404, determining - using a personhood-recognition model trained and provided by the model provider 304 - whether or not the collected facial image depicts a real person.

FIG. 8 shows another method of determining whether a user 102 interacting with an electronic device 104, 106 is a real person.

The method comprises, in an operation 402, collecting a facial image of a user 102 without interrupting their interaction with the electronic device 104, 106. The facial image may be, for example, collected by a camera 202 of the electronic device 104, 106.

The method further comprises, in an operation 404, determining - using a personhood-recognition model trained and provided by the model provider 304 - whether or not the collected facial image depicts a real person.

The method further comprises, in an operation 802, collecting - at a later time - another facial image of the user 102 without interrupting their interaction with the electronic device 104, 106. The most recently collected facial image may be, for example, collected by the camera 202 of the electronic device 104, 106.

The method further comprises, in an operation 804, determining whether the user 102 depicted in the most recently collected facial image has changed to a new user.

If the user has not changed to a new user, the method returns to operation 802, which is repeated at regular or semi-regular intervals, or on a continuous basis, as needed.

If, however, the user has changed to a new user, the method proceeds to operation 806 and/or to operation 808.

In operation 808, the method further comprises, registering the input received from the new user as part of a new interaction. In other words, each user's interaction with the electronic device 104, 106 may be separately collected, recorded and stored.

In operation 810, the method further comprises, terminating the new user's interaction with the electronic device 104, 106 and/or discarding input received from the new user 102 as part of their interaction with the electronic device 104, 106.

After operations 808 and 810, the method returns to operation 404, to determine whether or not the new user depicted in the newly collected facial image is a real person.

The method of FIG. 8 may be repeated on a regular basis (e.g., at regular or semi-regular intervals, or on a continuous basis) to provide a monitoring functionality to the methods described herein.

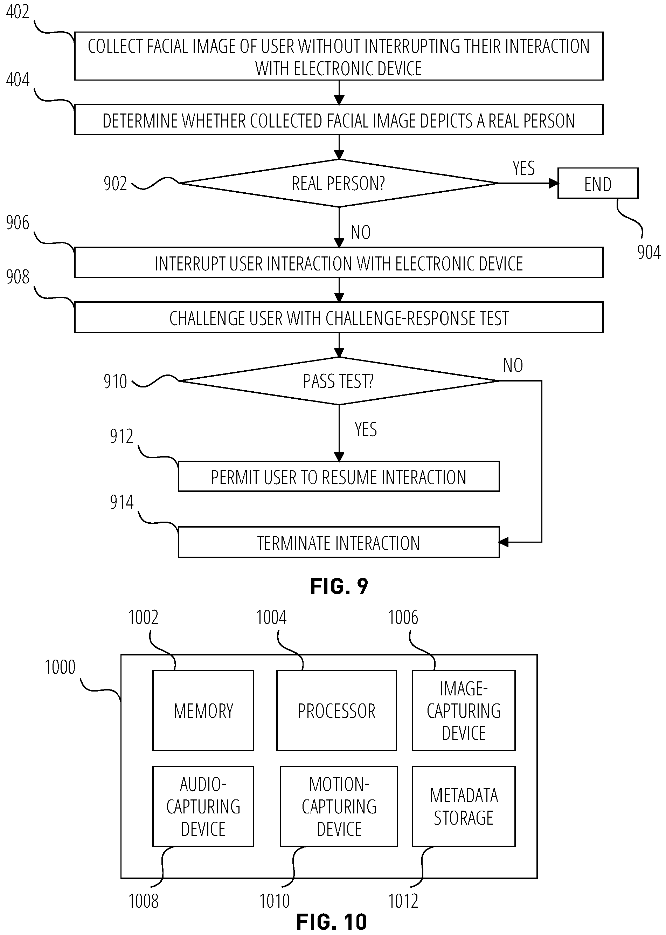

FIG. 9 shows another method of determining whether a user 102 interacting with an electronic device 104, 106 is a real person.

The method comprises, in an operation 402, collecting a facial image of a user 102 without interrupting their interaction with the electronic device 104, 106. The facial image may be, for example, collected by a camera 202 of the electronic device 104, 106.

The method further comprises, in an operation 404, determining - using a personhood-recognition model trained and provided by the model provider 304 - whether or not the collected facial image depicts a real person.

The method further comprises a decision branching point at operation 902 depending on whether it is determined, in operation 404, whether or not the user depicted in the collected facial image is a real person.

If the user 102 depicted in the collected facial image is determined to be a real person, then the method ends at operation 904.

If, however, it is determined that the user 102 depicted in the collected facial image is not a real person, the method proceeds to operation 906, in which the method comprises interrupting the user's interaction with the electronic device 104, 106.

The method comprises, in an operation 908, challenging the user 102 to authenticate themselves as a real person by successfully passing a challenge-response test, such as a CAPTCHA.

The method further comprises, in an operation 910, determining whether the user 102 passed the challenge-response test.

If the user 102 passes the challenge-response test, the method proceeds to operation 912, in which the user 102 is permitted to resume their interaction with the electronic device 104, 106.

If, however, the user 102 fails the challenge-response test, the method proceeds to operation 914, in which the user's interaction with the electronic device 104, 106 is terminated.

For the avoidance of doubt, any of the methods described above in relation to FIGS. 4 to 9 may be combined and/or interleaved in any suitable combination to achieve the combination of benefits achieved by each of the combined/interleaved methods individually.

FIG. 10 is a schematic of a computing system/apparatus 1000 suitable for carrying out the methods described herein. The computing system/apparatus 1000 may be referred to herein as computing device 1000.

The computing device 1000 comprises a memory 1002 for storing data and/or instructions for execution, a processor 1004 for carrying out the methods described herein, an image-capturing device 1006 configured to capture and/or receive facial image data, an audio-capturing device 1008configured to capture and/or receive audio data, a motion-capturing device 1010 configured to capture and/or receive device motion data, and a metadata storage 1012 for storing user metadata (e.g., user profiles and/or demographic profiles) and device metadata (e.g., device profiles).

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

The terms "a" (or "an"), as well as the terms "one or more" and "at least one" can be used interchangeably herein.

The term "and/or" as used herein is to be taken as specific disclosure of each of specified listed features or components with or without one or more of the others. Thus, the term "and/or" as used in a phrase such as "A, B and/or C" encompasses each of: A and Band C; A and B; A and C; B and C; A or B or C; A or C; A or C; B or C; only A; only B; and only C.

The use of the term "comprise" and "include" to refer to the inclusion of integers, steps and/or operations nonetheless also encompasses aspects, examples and embodiments that may be analogously described with the term "consist" in respect of those integers, steps and/or operations.

## Claims

1. A computer-implemented method of determining whether a user (102) providing feedback in a feedback collection process is a real person, the method comprising:
collecting (402) a facial image of the user while they interact with an electronic device (104, 106) to provide feedback without interrupting the user's interaction with the electronic device; and
determining (404), using a personhood-recognition model, whether the collected facial image depicts a real person, wherein the personhood-recognition model is trained using a database of previously collected facial images to determine whether a given facial image depicts a real person,
**characterised in that**:
the personhood-recognition model includes a generative model; and
the step of determining, using the personhood-recognition model, whether the collected facial image depicts a real person comprises:
providing, by the generative model, a proposed determination to an administrator of a personhood-verification system, the proposed determination including one or more decision criteria, and
if the administrator does not approve the one or more decision criteria associated with a most recently provided proposed determination:
in response to one or more inputs from the administrator to the generative model, updating the one or more decision criteria, and updating the proposed determination in accordance with the updated one or more decision criteria, and
providing, by the generative model, the updated proposed determination to the administrator, the updated proposed determination including the updated one or more decision criteria, and/or
if the administrator approves the one or more decision criteria associated with the most recently provided proposed determination:
selecting the most recently provided proposed determination as the determination of whether the collected facial image depicts a real person.

2. The computer-implemented method of claim 1, the method further comprising:
determining (504), using the personhood-recognition model, whether the collected facial image depicts a user that has previously participated in the feedback collection process or a unique user that has not previously participated in the feedback collection process, and/or
determining (502), using the personhood-recognition model, whether the collected facial image depicts a person in a predetermined demographic group.

3. The computer-implemented method of claim 1 or 2, the method further comprising:
collecting further data associated with the user while they interact with the electronic device to provide feedback without interrupting the user's interaction with the electronic device,
wherein the further data is not a facial image of the user, and
wherein the further data is used by the personhood-recognition model in the determining of whether the collected facial image depicts a real person.

4. The computer-implemented method of claim 3, wherein the further data is one or more of:
audio data of the user while they interact with the electronic device,
motion data indicative of movement of the electronic device,
user metadata associated with a user profile of the user, and/or
device metadata associated with a device profile of the electronic device.

5. The computer-implemented method of any one of claims 1 to 4, the method further comprising:
determining (602) a confidence score indicative of a confidence level associated with the determination of whether the collected facial image depicts a real person; and
if the confidence score is below a predetermined confidence threshold:
(a) discarding (610) the collected facial image,
(b) collecting (612) a new facial image of the user while they interact with the electronic device to provide feedback without interrupting the user's interaction with the electronic device, and
(c) determining, using the personhood-recognition model, whether the new collected facial image depicts a real person.

6. The computer-implemented method of claim 5, the method further comprising:
(d) determining a new confidence score indicative of a confidence level associated with the determination of whether the new collected facial image depicts a real person; and
if the new confidence score is below the predetermined confidence threshold, iteratively repeating operations (a) to (d) until a determined corresponding new confidence score is not below the predetermined confidence threshold.

7. The computer-implemented method of claim 6, the method further comprising:
for each iteration of operations (a) to (d), increasing (614) a complexity of the personhood-recognition model to improve the confidence score associated with each determination of whether each new collected facial image depicts a real person, wherein increasing the complexity of the personhood recognition model includes one or more of:
increasing computing resources available for use by the personhood-recognition model for determining whether a new collected facial image depicts a real person;
increasing a number of collected facial images used by the personhood-recognition model for determining whether a new collected facial image depicts a real person; and/or
increasing a number of modalities of input data used by the personhood-recognition model for determining whether a new collected facial image depicts a real person.

8. The computer-implemented of any one of claims 5 to 7, the method further comprising:
after determining a predetermined number of confidence scores, each being indicative of a respective confidence level associated with a determination of whether a corresponding collected facial image depicts a real person, if the most recently determined new confidence score is below the predetermined confidence threshold:
interrupting (618) the user's interaction with the electronic device;
prompting (620) the user to position themselves in a predetermined orientation relative to a camera (202);
collecting (622), by the camera, an additional facial image of the user while their interaction with the electronic device is interrupted; and
determining (624), using the personhood-recognition model, whether the additional collected facial image depicts a real person,
wherein the predetermined orientation is chosen such that an additional confidence score associated with the determination of whether the additional collected facial image depicts a real person is not below the predetermined confidence threshold.

9. The computer-implemented method of claim 8, the method further comprising:
determining (626) the additional confidence score; and
if the additional confidence score is below the predetermined confidence threshold, terminating the feedback collection process and/or discarding the feedback received from the user during the feedback collection process.

10. The computer-implemented method of any one of claims 1 to 9, the method further comprising:
before the determining of whether the or each collected facial image depicts a real person, determining (702) a respective quality score indicative of the quality of the corresponding collected facial image; and
if the determined quality score is below a predetermined quality threshold:
(i) discarding the corresponding collected facial image, and
(ii) collecting (708) a further facial image of the user while they interact with the electronic device without interrupting the user's interaction with the electronic device.

11. The computer-implemented method of claim 10, the method further comprising:
after determining a predetermined number of quality scores, each being indicative of a respective quality of a corresponding collected facial image, if the most recently determined further quality score is below the predetermined quality threshold:
interrupting (710) the user's interaction with the electronic device;
prompting (712) the user to adjust one or more imaging conditions associated with the collection of facial images of the user to a predetermined condition; and
collecting (714) an other facial image of the user while their interaction with the electronic device is interrupted,
wherein the predetermined condition is chosen such that an other quality score associated with the other collected facial image is not below the predetermined quality threshold.

12. The computer-implemented method of any one of claims 1 to 11, the method further comprising:
repeating the method of any one of claims 1 to 18 continuously or at regular intervals to monitor the user interacting with the electronic device;
determining (804) whether the user has changed to a new user between a first iteration of the method and at least one of the later repetitions; and
in response to a determination that the user has changed to a new user, registering (806) the feedback provided by the new user as part of a new feedback collection process, or terminating (808) the feedback collection process, or discarding feedback collected from the new user.

13. The computer-implemented method of any one of claims 1 to 12, wherein the user interacting with the electronic device is interacting with an application programming interface, API, installed on the electronic device, wherein, if it is determined that the collected facial image does not depict a real person, the method further comprises:
interrupting (906) the user's interaction with the API;
challenging (908) the user with a challenge-response test adapted to tell computers and humans apart; and
if the user fails the challenge-response test, terminating (914) the API, or
if the user passes the challenge-response test, permitting (912) the user to resume their interaction with the API.

14. A computer comprising a memory and a processor configured to carry out the method of any one of claims 1 to 13.

15. A computer-readable medium comprising logic that, when executed by a processor, causes the processor to carry out the method of any one of claims 1 to 13.

## Patentansprüche

1. Computerimplementiertes Verfahren zum Bestimmen, ob ein Benutzer (102), der in einem Rückmeldeerfassungsvorgang eine Rückmeldung bereitstellt, eine reale Person ist, wobei das Verfahren Folgendes umfasst:
Erfassen (402) eines Gesichtsbilds des Benutzers, während dieser mit einer elektronischen Vorrichtung (104, 106) interagiert, um eine Rückmeldung bereitzustellen, ohne dadurch die Interaktion des Benutzers mit der elektronischen Vorrichtung zu unterbrechen; und
Bestimmen (404), ob das erfasste Gesichtsbild eine reale Person darstellt, unter Verwendung eines Personenerkennungsmodells, wobei das Personenerkennungsmodell unter Verwendung einer Datenbank von zuvor erfassten Gesichtsbildern trainiert wird, um zu bestimmen, ob ein gegebenes Gesichtsbild eine reale Person darstellt,
**dadurch gekennzeichnet, dass**:
das Personenerkennungsmodell ein generatives Modell umfasst; und
der Schritt des Bestimmens, ob das erfasste Gesichtsbild eine reale Person darstellt, unter Verwendung des Personenerkennungsmodells Folgendes umfasst:
Bereitstellen einer vorgeschlagenen Bestimmung für einen Administrator eines Personenverifikationssystems durch das generative Modell, wobei die vorgeschlagene Bestimmung ein oder mehrere Entscheidungskriterien umfasst, und
falls der Administrator das eine oder die mehreren Entscheidungskriterien, die einer zuletzt bereitgestellten vorgeschlagenen Bestimmung zugeordnet sind, nicht genehmigt:
als Reaktion auf eine oder mehrere Eingaben von dem Administrator an das generative Modell, Aktualisieren des einen oder der mehreren Entscheidungskriterien und Aktualisieren der vorgeschlagenen Bestimmung gemäß dem einen oder den mehreren aktualisierten Entscheidungskriterien, und
Bereitstellen der aktualisierten vorgeschlagenen Bestimmung für den Administrator durch das generative Modell, wobei die aktualisierte vorgeschlagene Bestimmung das eine oder die mehreren aktualisierten Entscheidungskriterien umfasst, und/oder
falls der Administrator das eine oder die mehreren Entscheidungskriterien, die einer zuletzt bereitgestellten vorgeschlagenen Bestimmung zugeordnet sind, genehmigt:
Auswählen der zuletzt bereitgestellten vorgeschlagenen Bestimmung als Bestimmung dessen, ob das erfasste Gesichtsbild eine reale Person darstellt.

2. Computerimplementiertes Verfahren nach Anspruch 1, wobei das Verfahren ferner Folgendes umfasst:
Bestimmen (504), ob das erfasste Gesichtsbild einen Benutzer darstellt, der zuvor an dem Rückmeldeerfassungsvorgang teilgenommen hat, oder einen individuellen Benutzer darstellt, der zuvor nicht an dem Rückmeldeerfassungsvorgang teilgenommen hat, unter Verwendung des Personenerkennungsmodells, und/oder
Bestimmen (502), ob das erfasste Gesichtsbild eine Person in einer vorbestimmten demografischen Gruppe darstellt, unter Verwendung des Personenerkennungsmodells.

3. Computerimplementiertes Verfahren nach Anspruch 1 oder 2, wobei das Verfahren ferner Folgendes umfasst:
Erfassen weiterer Daten, die dem Benutzer zugeordnet sind, während dieser mit der elektronischen Vorrichtung interagiert, um eine Rückmeldung bereitzustellen, ohne dabei die Interaktion des Benutzers mit der elektronischen Vorrichtung zu unterbrechen,
wobei die weiteren Daten kein Gesichtsbild des Benutzers sind und
wobei die weiteren Daten durch das Personenerkennungsmodell beim Bestimmen verwendet werden, ob das erfasste Gesichtsbild eine reale Person darstellt.

4. Computerimplementiertes Verfahren nach Anspruch 3, wobei die weiteren Daten eines oder mehrere aus Folgenden sind:
Audiodaten des Benutzers, während dieser mit der elektronischen Vorrichtung interagiert,
Bewegungsdaten, die eine Bewegung der elektronischen Vorrichtung angeben,
Benutzermetadaten, die einem Benutzerprofil des Benutzers zugeordnet sind,
und/oder
Vorrichtungsmetadaten, die einem Vorrichtungsprofil der elektronischen Vorrichtung zugeordnet sind.

5. Computerimplementiertes Verfahren nach einem der Ansprüche 1 bis 4, wobei das Verfahren ferner Folgendes umfasst:
Bestimmen (602) einer Konfidenzbewertung, die einen Konfidenzgrad angibt, der der Bestimmung zugeordnet ist, ob das erfasste Gesichtsbild eine reale Person darstellt; und
falls die Konfidenzbewertung unter einem vorbestimmten Konfidenzschwellenwert liegt:
(a) Verwerfen (610) des erfassten Gesichtsbilds,
(b) Erfassen (612) eines neuen Gesichtsbilds des Benutzers, während dieser mit der elektronischen Vorrichtung interagiert, um eine Rückmeldung bereitzustellen, ohne die Interaktion des Benutzers mit der elektronischen Vorrichtung zu unterbrechen, und
(c) Bestimmen, ob das neue erfasste Gesichtsbild eine reale Person darstellt, unter Verwendung des Personenerkennungsmodells.

6. Computerimplementiertes Verfahren nach Anspruch 5, wobei das Verfahren ferner Folgendes umfasst:
(d) Bestimmen einer neuen Konfidenzbewertung, die einen Konfidenzgrad angibt, der der Bestimmung zugeordnet ist, ob das neue erfasste Gesichtsbild eine reale Person darstellt; und
falls die neue Konfidenzbewertung unter dem vorbestimmten Konfidenzschwellenwert liegt, mehrmaliges Wiederholen der Vorgänge (a) bis (d), bis eine bestimmte entsprechende neue Konfidenzbewertung nicht unter dem vorbestimmten Konfidenzschwellenwert liegt.

7. Computerimplementiertes Verfahren nach Anspruch 6, wobei das Verfahren ferner Folgendes umfasst:
für jede Wiederholung der Vorgänge (a) bis (d), Erhöhen (614) einer Komplexität des Personenerkennungsmodells, um die Konfidenzbewertung, die jeder Bestimmung zugeordnet ist, ob jedes neue erfasste Gesichtsbild eine reale Person darstellt, zu verbessern, wobei das Erhöhen der Komplexität des Personenerkennungsmodells eines oder mehrere der Folgenden umfasst:
Erhöhen von Computerressourcen, die zur Verwendung durch das Personenerkennungsmodell zum Bestimmen, ob ein neues erfasstes Gesichtsbild eine reale Person darstellt, verfügbar sind;
Erhöhen einer Anzahl von erfassten Gesichtsbildern, die von dem Personenerkennungsmodell zum Bestimmen, ob ein neues erfasstes Gesichtsbild eine reale Person darstellt, verwendet werden; und/oder
Erhöhen einer Anzahl von Modalitäten von Eingabedaten, die von dem Personenerkennungsmodell zum Bestimmen, ob ein neues erfasstes Gesichtsbild eine reale Person darstellt, verwendet werden.

8. Computerimplementiertes Verfahren nach einem der Ansprüche 5 bis 7, wobei das Verfahren ferner Folgendes umfasst:
nach dem Bestimmen einer vorbestimmten Anzahl von Konfidenzbewertungen, von denen jede ein entsprechendes Konfidenzniveau angibt, das einer Bestimmung, ob ein entsprechendes erfasstes Gesichtsbild eine reale Person darstellt, zugeordnet ist, falls die zuletzt bestimmte neue Konfidenzbewertung unter dem vorbestimmten Konfidenzschwellenwert liegt:
Unterbrechen (618) der Interaktion des Benutzers mit der elektronischen Vorrichtung,
Anweisen (620) des Benutzers, sich in einer vorbestimmten Ausrichtung relativ zu einer Kamera (202) zu positionieren;
Erfassen (622) eines zusätzlichen Gesichtsbilds des Benutzers, während dessen Interaktion mit der elektronischen Vorrichtung unterbrochen ist, durch die Kamera; und
Bestimmen (624), ob das zusätzliche erfasste Gesichtsbild eine reale Person darstellt, unter Verwendung des Personenerkennungsmodells,
wobei die vorbestimmte Ausrichtung so gewählt ist, dass eine zusätzliche Konfidenzbewertung, die der Bestimmung, ob das zusätzliche erfasste Gesichtsbild eine reale Person darstellt, zugeordnet ist, nicht unter dem vorbestimmten Konfidenzschwellenwert liegt.

9. Computerimplementiertes Verfahren nach Anspruch 8, wobei das Verfahren ferner Folgendes umfasst:
Bestimmen (626) der zusätzlichen Konfidenzbewertung; und
falls die zusätzliche Konfidenzbewertung unter dem vorbestimmten Konfidenzschwellenwert liegt, Anhalten des Rückmeldeerfassungsvorgangs und/oder Verwerfen der von dem Benutzer während des Rückmeldeerfassungsvorgangs empfangenen Rückmeldung.

10. Computerimplementiertes Verfahren nach einem der Ansprüche 1 bis 9, wobei das Verfahren ferner Folgendes umfasst:
vor dem Bestimmen, ob das oder jedes erfasste Gesichtsbild eine reale Person darstellt, Bestimmen (702) einer entsprechenden Qualitätsbewertung, die die Qualität des entsprechenden erfassten Gesichtsbilds angibt; und
falls die bestimmte Qualitätsbewertung unter einem vorbestimmten Qualitätsschwellenwert liegt:
(i) Verwerfen des entsprechenden erfassten Gesichtsbilds und
(ii) Erfassen (708) eines weiteren Gesichtsbilds des Benutzers, während dieser mit der elektronischen Vorrichtung interagiert, ohne dabei die Interaktion des Benutzers mit der elektronischen Vorrichtung zu unterbrechen.

11. Computerimplementiertes Verfahren nach Anspruch 10, wobei das Verfahren ferner Folgendes umfasst:
nach dem Bestimmen einer vorbestimmten Anzahl von Qualitätsbewertungen, von denen jede eine entsprechende Qualität eines entsprechenden Gesichtsbilds angibt, falls die zuletzt bestimmte weitere Qualitätsbewertung unter dem vorbestimmten Qualitätsschwellenwert liegt:
Unterbrechen (710) der Interaktion des Benutzers mit der elektronischen Vorrichtung,
Anweisen (712) des Benutzers, eine oder mehrere Bilderfassungsbedingungen, die der Erfassung von Gesichtsbildern des Benutzers zugeordnet sind, auf eine vorbestimmte Bedingung einzustellen; und
Erfassen (714) eines anderen Gesichtsbilds des Benutzers, während dessen Interaktion mit der elektronischen Vorrichtung unterbrochen ist,
wobei die vorbestimmte Bedingung so gewählt ist, dass eine andere Qualitätsbewertung, die dem anderen erfassten Gesichtsbild zugeordnet ist, nicht unter dem vorbestimmten Qualitätsschwellenwert liegt.

12. Computerimplementiertes Verfahren nach einem der Ansprüche 1 bis 11, wobei das Verfahren ferner Folgendes umfasst:
Wiederholen eines Verfahrens nach einem der Ansprüche 1 bis 18 kontinuierlich oder in regelmäßigen Abständen, um den Benutzer, der mit der elektronischen Vorrichtung interagiert, zu überwachen;
Bestimmen (804), ob der Benutzer zwischen einer ersten Wiederholung des Verfahrens und zumindest einer der späteren Wiederholungen zu einem neuen Benutzer geworden ist; und
als Reaktion auf eine Bestimmung, dass der Benutzer zu einem neuen Benutzer geworden ist, Registrieren (806) der Rückmeldung, das durch den neuen Benutzer bereitgestellt wurde, als Teil eines neuen Rückmeldeerfassungsvorgangs oder Anhalten (808) des Rückmeldeerfassungsvorgangs oder Verwerfen der von dem neuen Benutzer erfassten Rückmeldung.

13. Computerimplementiertes Verfahren nach einem der Ansprüche 1 bis 12, wobei der Benutzer, der mit der elektronischen Vorrichtung interagiert, mit einer Anwendungsprogrammierschnittstelle, API, interagiert, die auf der elektronischen Vorrichtung installiert ist, wobei, falls bestimmt wird, dass das erfasste Gesichtsbild keine reale Person darstellt, das Verfahren ferner Folgendes umfasst:
Unterbrechen (906) der Interaktion des Benutzers mit der API;
Auffordern (908) des Benutzers zu einem Aufforderungsreaktionstest, der ausgelegt ist, um Computer und Menschen zu unterscheiden; und
falls der Benutzer den Aufforderungsreaktionstest nicht besteht, Anhalten (914) der API oder
falls der Benutzer den Aufforderungsreaktionstest besteht, Zulassen (912), dass der Benutzer dessen Interaktion mit der API fortsetzt.

14. Computer, umfassend einen Speicher und einen Prozessor, der ausgelegt ist, um ein Verfahren nach einem der Ansprüche 1 bis 13 auszuführen.

15. Computerlesbares Medium, umfassend eine Logik, die, wenn sie durch einen Prozessor ausgeführt wird, bewirkt, dass der Prozessor ein Verfahren nach einem der Ansprüche 1 bis 13 ausführt.

## Revendications

1. Procédé mis en œuvre par ordinateur permettant de déterminer si un utilisateur (102) fournissant des rétroactions dans le cadre d'un processus de collecte de rétroactions est une personne réelle, le procédé comprenant les étapes consistant à :
collecter une image faciale de l'utilisateur pendant qu'il interagit avec un dispositif électronique (104, 106) pour fournir des rétroactions sans interrompre l'interaction de l'utilisateur avec le dispositif électronique ; et
déterminer (404), à l'aide d'un modèle de reconnaissance de personne, si l'image faciale collectée représente une personne réelle, dans lequel le modèle de reconnaissance de personne est entraîné à l'aide d'une base de données d'images faciales collectées précédemment afin de déterminer si une image faciale donnée représente une personne réelle,
caractérisé en que :
le modèle de reconnaissance de personne comprend un modèle génératif, et
l'étape de détermination, à l'aide du modèle de reconnaissance de personne, que l'image faciale collectée représente une personne réelle comprend les étapes consistant à :
fournir, par l'intermédiaire du modèle génératif, une détermination proposée à un administrateur d'un système de vérification de personne, la détermination proposée incluant un ou plusieurs critères de décision ; et
si l'administrateur n'approuve pas les un ou plusieurs critères de décision associés à une détermination proposée fournie la plus récente :
en réponse à une ou plusieurs entrées de l'administrateur dans le modèle génératif, mettre à jour les un ou plusieurs critères de décision, et mettre à jour la détermination proposées conformément aux un ou plusieurs critères de sélection mis à jour ; et
fournir, par l'intermédiaire du modèle génératif, la détermination proposée mise à jour à l'administrateur, la détermination proposée mise à jour incluant les un ou plusieurs critères de décision mis à jour, et/ou
si l'administrateur approuve les un ou plusieurs critères de décision associés à la détermination proposée fournie la plus récente :
sélectionner la détermination proposée fournie la plus récente comme détermination que l'image faciale collectée représente ou non une personne réelle.

2. Procédé mis en œuvre par ordinateur selon la revendication 1, le procédé comprenant en outre les étapes consistant à :
déterminer (504), à l'aide du modèle de reconnaissance de personne, si l'image faciale collectée représente un utilisateur qui a déjà participé au processus de collecte de rétroactions ou un utilisateur unique qui n'a pas déjà participé au processus de collecte de rétroaction, et/ou
déterminer (502), à l'aide du modèle de reconnaissance de personne, si l'image faciale collectée représente ou non une personne appartenant à un groupe démographique prédéterminé.

3. Procédé mis en œuvre par ordinateur selon la revendication 1 ou 2, le procédé comprenant en outre l'étape consistant à :
collecter des données supplémentaires associées à l'utilisateur pendant qu'il interagit avec le dispositif électronique pour fournir une rétroaction sans interrompre l'interaction de l'utilisateur avec le dispositif électronique,
dans lequel les données supplémentaires ne sont pas une image faciale de l'utilisateur, et
dans lequel les données supplémentaires sont utilisées par le modèle de reconnaissance de personne pour déterminer si l'image faciale collectée représente une personne réelle.

4. Procédé mis en œuvre par ordinateur selon la revendication 3, dans lequel les données supplémentaires sont une ou plusieurs parmi :
des données audio de l'utilisateur pendant qu'il interagit avec le dispositif électronique,
des données de mouvement indiquant un mouvement du dispositif électronique,
des métadonnées d'utilisateur associées à un profil d'utilisateur et/ou
des métadonnées du dispositif associées à un profil de dispositif du dispositif électronique.

5. Procédé mis en œuvre par ordinateur selon l'une quelconque des revendications 1 à 4, le procédé comprenant en outre les étapes consistant à :
déterminer (602) un score de confiance indicatif d'un niveau de confiance associé à la détermination que l'image faciale collectée représente ou non une personne réelle ; et
si le score de confiance est inférieur à un seuil de confiance prédéterminé :
(a) rejeter (610) l'image faciale collectée,
(b) collecter (612) une nouvelle image faciale de l'utilisateur pendant qu'il interagit avec le dispositif électronique afin de fournir une rétroaction sans interrompre l'interaction de l'utilisateur avec le dispositif électronique, et
(c) déterminer, à l'aide du modèle de reconnaissance de personne, si la nouvelle image faciale collectée représente ou non une personne réelle.

6. Procédé mis en œuvre par ordinateur selon la revendication 5, le procédé comprenant en outre les étapes consistant à :
(d) déterminer un nouveau score de confiance indicatif d'un niveau de confiance associé à la détermination que la nouvelle image faciale collectée représente ou non une personne réelle ; et
si le nouveau score de confiance est inférieur au seuil de confiance prédéterminé, répéter de manière itérative les opérations (a) à (d) jusqu'à ce qu'un nouveau score de confiance correspondant déterminé ne soit pas inférieur au seuil de confiance prédéterminé.

7. Procédé mis en œuvre par ordinateur selon la revendication 6, le procédé comprenant en outre les étapes consistant à :
pour chaque itération des opérations (a) à (d), augmenter (614)la complexité du modèle de reconnaissance de la personne afin d'améliorer le score de confiance associé à chaque détermination que chaque nouvelle image faciale collectée représente ou non une personne réelle, dans lequel l'augmentation de la complexité du modèle de reconnaissance de personne comprend une ou plusieurs des étapes consistant à :
augmenter des ressources informatiques disponibles pour être utilisées par le modèle de reconnaissance de personne afin de déterminer si une nouvelle image faciale collectée représente ou non une personne réelle ;
augmenter un nombre d'images faciales collectées utilisées par le modèle de reconnaissance de personne afin de déterminer si une nouvelle image faciale collectée représente ou non une personne réelle ; et/ou
augmenter un nombre de modalités de données d'entrée utilisées par le modèle de reconnaissance de personne afin de déterminer si une nouvelle image faciale collectée représente ou non une personne réelle.

8. Procédé mis en œuvre par ordinateur selon l'une quelconque des revendications 5 à 7, le procédé comprenant en outre les étapes consistant à :
après avoir déterminé un nombre prédéterminé de scores de confiance, chacun étant indicatif d'un niveau de confiance respectif associé à une détermination qu'une une image faciale collectée correspondante représente ou non une personne réelle, si le nouveau score de confiance déterminé le plus récemment est inférieur au seuil de confiance prédéterminé :
interrompre (618) l'interaction de l'utilisateur avec le dispositif électronique ;
inviter (620) l'utilisateur de se positionner lui-même dans une orientation prédéterminée par rapport à une caméra (202) ;
collecter (622), par l'intermédiaire de la caméra, une image faciale supplémentaire de l'utilisateur pendant que son interaction avec le dispositif électronique est interrompue ; et
déterminer (624), à l'aide du modèle de reconnaissance de personne, si l'image faciale supplémentaire collectée représente ou non une personne réelle,
dans lequel l'orientation prédéterminée est choisie de telle sorte qu'un score de confiance supplémentaire associé à la détermination que l'image faciale supplémentaire collectée représente ou non une personne réelle ne soit pas inférieur au seuil de confiance prédéterminé.

9. Procédé mis en œuvre par ordinateur selon la revendication 8, le procédé comprenant en outre les étapes consistant à :
déterminer (626) le score de confiance supplémentaire ;
et
si le score de confiance supplémentaire est inférieur au seuil de confiance prédéterminé, achever le processus de collecte de rétroactions et/ou rejeter les rétroactions reçues de l'utilisateur au cours du processus de collecte de rétroactions.

10. Procédé mis en œuvre par ordinateur selon l'une quelconque des revendications 1 à 9, le procédé comprenant en outre les étapes consistant à :
avant de déterminer si la ou chaque image faciale collectée représente ou non une personne réelle, déterminer (702) un score de qualité respectif indicatif de la qualité de l'image faciale collectée correspondante ; et
si le score de qualité déterminé est inférieur à un seuil de qualité prédéterminé :
(i) rejeter l'image faciale correspondante collectée, et
(ii) collecter (708) une image faciale supplémentaire de l'utilisateur pendant qu'il interagit avec le dispositif électronique sans interrompre l'interaction de l'utilisateur avec le dispositif électronique.

11. Procédé mis en œuvre par ordinateur selon la revendication 10, le procédé comprenant en outre les étapes consistant à :
après avoir déterminé un nombre prédéterminé de scores de qualité, chacun étant indicatif d'une qualité respective d'une image faciale collectée correspondante, si le score de qualité déterminé le plus récemment est inférieur au seuil de qualité prédéterminé :
interrompre (710) l'interaction de l'utilisateur avec le dispositif électronique ;
inviter (712) l'utilisateur à ajuster une ou plusieurs conditions d'imagerie associées à la collecte d'images faciales de l'utilisateur à une condition prédéterminée ; et
collecter (714) une autre image faciale de l'utilisateur pendant que son interaction avec le dispositif électronique est interrompue,
dans lequel la condition prédéterminée est choisie de telle sorte qu'un autre score de qualité associé à l'autre image faciale collectée ne soit pas inférieur au seuil de qualité prédéterminé.

12. Procédé mis en œuvre par ordinateur selon l'une quelconque des revendications 1 à 11, le procédé comprenant en outre les étapes consistant à
répéter en continu ou à intervalles réguliers le procédé selon l'une quelconque des revendications 1 à 11 afin de surveiller l'utilisateur interagissant avec le dispositif électronique ;
déterminer (804) si l'utilisateur a changé ou non pour un nouvel utilisateur entre une première itération du procédé et au moins une des répétitions ultérieures ; et
en réponse à une détermination que l'utilisateur a changé pour un nouvel utilisateur, enregistrer (806) les rétroactions fournies par le nouvel utilisateur en tant que d'un nouveau processus de collecte de rétroactions, ou mettre fin (808) au processus de collecte de rétroaction, ou rejeter des rétroactions collectées auprès du nouvel utilisateur.

13. Procédé mis en œuvre par ordinateur selon l'une quelconque des revendications 1 à 12, dans lequel l'utilisateur interagissant avec le dispositif électronique interagit avec une interface de programmation d'application, API, installée sur le dispositif électronique, dans lequel s'il est déterminé que l'image faciale collectée ne représente pas une personne réelle, le procédé comprend en outre les étapes consistant à :
interrompre (906) l'interaction de l'utilisateur avec l'API ;
soumettre (908) l'utilisateur à un test de réponse à un défi adapté pour distinguer des ordinateurs et des humains ; et
si l'utilisateur échoue au test de réponse à un défi, mettre fin (914) à l'API, ou
si l'utilisateur réussit le test de réponse à un défi, autoriser (912) l'utilisateur à reprendre son interaction avec l'API.

14. Ordinateur comprenant une mémoire et un processeur configurés pour exécuter le procédé selon l'une quelconque des revendications 1 à 13.

15. Support lisible par ordinateur comprenant une logique qui, lorsqu'elle est exécutée par un processeur, amène le processeur à mettre en œuvre le procédé selon l'une quelconque des revendications 1 à 13.
